# EUROPEAN PATENT SPECIFICATION

(11) **EP 3 378 750 B1**
(45) Date of publication and mention of the grant of the patent: **13.11.2019**
(21) Application number: 18160492.7
(22) Date of filing: 07.03.2018
(51) Int. Cl.: B62K 19/40, B62K 25/00, B62K 25/28, B62L 1/00

(54) **LINEAR MEMBER HOLDING STRUCTURE OF SADDLE-RIDING TYPE VEHICLE**
HALTESTRUKTUR FÜR EIN LINEARES ELEMENT EINES SATTELFAHRZEUGS
STRUCTURE DE SUPPORT D'UN ÉLÉMENT LINÉAIRE D'UN VÉHICULE DE TYPE À SELLE

(30) Priority: 23.03.2017 JP 2017057386
(43) Date of publication of application: 26.09.2018
(73) Proprietor: HONDA MOTOR CO., LTD., Tokyo 107-8556 (JP)
(72) Inventor: Hiramaru, Masayuki, Saitama, 351-0193 (JP); Suzuki, Yuta, Saitama, 351-0193 (JP); Kurokawa, Kazuaki, Saitama, 351-0193 (JP); Hazama, Yukinobu, Tokyo, 100-0005 (JP)
(74) Representative: Kiwit, Benedikt

(56) References cited:
- WO-A1-2015/092834
- JP-A- H08 324 419
- JP-A- 2003 072 623
- JP-A- 2013 047 036
- US-A- 4 678 054
- US-A1- 2005 029 772

## Description

### Technical Field

The present invention relates to a linear member holding structure of a saddle-riding type vehicle.

### Background Art

In a saddle-riding type vehicle such as a motorcycle, generally, linear members such as a brake pipe and a wire harness are disposed along a body frame or the like. For example, a structure is disclosed in Patent Document 1 in which a brake pipe and a sensor harness are disposed on an inward tapered surface of a swing arm that rotatably supports a rear wheel of a motorcycle and is swingably supported on the vehicle body.
Patent Document 2 discloses a rear fork that is pivotally supported at its front end to the vehicle body and that supports a rear wheel. The rear fork is provided with a pair of left and right arms. A brake hose for transferring hydraulic pressure to a brake caliper is disposed in the front-rear direction on a portion of the right arm and the brake hose is fixed via U-shaped hose clamps of a movable fender that covers the front of the rear wheel and that is fixed to the rear fork.

Patent Document 3 discloses a rear swing arm structure according to the preamble of claim 1.

### Prior Art Document

### Patent Document

Patent Document 1: WO 2015-092834 A1
Patent Document 2: JP 2003-072623 A
Patent Document 3: JP H08 324419A

### Summary of the Invention

### Problem to be Solved

In the structures disclosed in Patent Documents 1-3, however, linear members such as the brake pipe and the sensor harness are exposed to face the rear wheel over a long distance in a side view of the vehicle. Therefore, the linear members may be poor in appearance and may also be hit by stepping stones while driving.

The present invention has been made in view of the above circumstances and provides a linear member holding structure of a saddle-riding type vehicle that is capable of protect a linear member from stepping stones and is excellent in appearance design properties.

### Means for Solving the Problem

According to an embodiment of the present invention, there is provided
(1) a linear member holding structure of a saddle-riding type vehicle including:
   a swing arm that includes a front portion which is swingably supported by a body frame and a rear portion which rotatably supports a rear wheel via a driving shaft; and
   a linear member that extends along the swing arm in a front-rear direction of the vehicle and includes at least a rear wheel brake pipe and a sensor harness,
   wherein the swing arm has at least a part having a vertical section formed longer in an upper-lower direction than in a vehicle width direction,
   wherein the part of the swing arm is formed with a recess on an upper part thereof,
   wherein the recess includes a recess bottom surface and a recess inside surface standing from the recess bottom surface and opposed to a center in the vehicle width direction,
   wherein the recess inside surface has a width longer in the upper-lower direction than a width in the vehicle width direction of the recess bottom surface, and
   wherein the brake pipe and the sensor harness are arranged in the upper-lower direction to be accommodated in the recess,
   the recess includes a recess opening at least opened toward an upper side of the vehicle, and
   at least a part of the recess opening is covered with a slider that forms a sliding surface of an endless transmission member for transmitting a driving force to the rear wheel.
(2) In the linear member holding structure of (1),
   the recess opening may be opened upward and inward in the vehicle,
   the brake pipe may be larger in diameter than the sensor harness,
   the brake pipe may be disposed above the sensor harness,
   the brake pipe and the sensor harness may be held by a holding member fixed to the swing arm, and
   the holding member may regulate upward movement of the brake pipe while regulating inward movement of the brake pipe and the sensor harness.
(3) In the linear member holding structure of (2),
   the holding member may include a projection that is provided between the brake pipe and the sensor harness to partition the recess in the upper-lower direction.
(4) In the linear member holding structure of any one of (1) to (3),
   the linear member may further include a lamp harness that supplies electric power to a lamp provided at a rear portion of the saddle-riding type vehicle, and
   the lamp harness may be provided to be in contact with the brake pipe and the sensor harness.
(5) In the linear member holding structure of any one of (1) to (4),
   the swing arm may have a cantilever structure in which an arm portion is provided only on a side on which the endless transmission member is disposed with respect to the rear wheel.

### Advantages of the Invention

According to (1), the recess is formed to be longer in the upper-lower direction in the vertical section of the swing arm where the width in the upper-lower direction is longer than the width in the vehicle width direction, it is possible to form accommodation spaces of the brake pipe and the sensor harness while reducing stress concentration of the swing arm. In addition, since the brake pipe and the sensor harness are vertically arranged to be accommodated in the recess, it is possible to protect the brake pipe and the sensor harness from stepping stones and the like and to have excellent appearance design properties.

Moreover, at least a part of the recess opening is covered with the slider, so that it is possible to regulate the upward movement of the brake pipe and the sensor harness in the recess. In addition, it is possible to effectively prevent interference of the endless transmission member with the brake pipe and the sensor harness by the slider. Further, since the recess is opened at least upward in the vehicle, the wiring of the linear member is easily performed.

According to (2), when the brake pipe and the sensor harness are accommodated in the recess including the recess opening opened upward and inward, since the large-diameter brake pipe is disposed at the uppermost side of the recess, the brake pipe can be used as a position regulating member of the sensor harness disposed below the brake pipe. In addition, since the holding member fixed to the swing arm regulates the upward movement of the brake pipe while regulating the inward movement of the brake pipe and the sensor harness, it is possible to prevent the brake pipe and the sensor harness from projecting from the recess.

According to (3), since the holding member includes the projection, which partitions the recess in the upper-lower direction, between the brake pipe and the sensor harness, the partition is provided in a space that is long in the upper-lower direction, and thus the movement of the brake pipe and the sensor harness can be effectively regulated.

According to (4), since the lamp harness is provided to be in contact with the brake pipe and the sensor harness, the lamp harness can regulate the movement of the brake pipe and the sensor harness.

According to (5), since the swing arm has the cantilever structure, the appearance design properties is excellent. In addition, the brake pipe and the sensor harness are disposed in the recess, so that it is possible to further reduce the interference of the endless transmission member with the brake pipe and the sensor harness. Moreover, since the brake pipe and the sensor harness are hardly seen from the outside of the vehicle, it is possible to further make the appearance design properties excellent.

### Brief Description of the Drawings

Fig. 1 is a left side view of a motorcycle according to an embodiment of the invention;
Fig. 2 is a plan view of a swing arm provided with a slider;
Fig. 3 is a cross-sectional view taken along line A-A in Fig. 1;
Fig. 4 is a view in which the slider is removed from the swing arm in Fig. 3;
Fig. 5 is a cross-sectional view taken along line B-B in Fig. 3; and
Fig. 6 is a cross-sectional view taken along line C-C in Fig. 3.

### Description of Embodiment

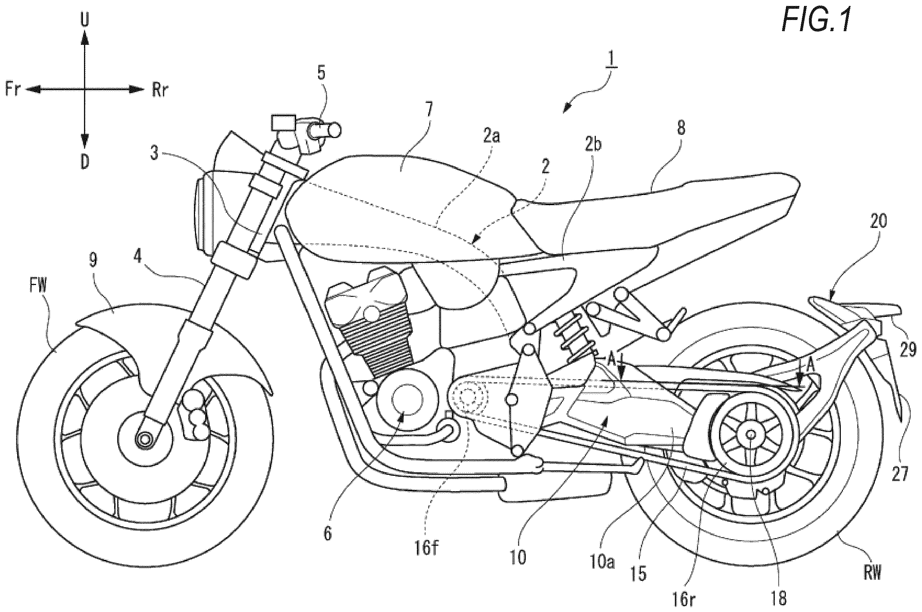

Hereinafter, a motorcycle, which is a saddle-riding type vehicle, according to an embodiment of the invention will be described with reference to Figs. 1 to 6. In the following description, it is assumed that the drawings are referred to by employing viewing directions as designated by reference characters, i.e., by setting front-rear, left-right, upper-lower directions as designated by the following reference characters Fr, Rr, L, R, U, and D, respectively, according to directions viewed by a driver.

As illustrated in Fig. 1, a motorcycle 1 is configured such that a head pipe 3 is provided at a front portion of a body frame 2, which is a skeleton portion, and a front wheel FW is supported by a front fork 4 extending forward and downward from the head pipe 3. A handle 5 is connected to an upper part of the front fork 4. A fuel tank 7 is disposed on a main frame 2a of the body frame 2, a riding sheet 8 is supported on a sheet rail 2b, and an engine 6 is disposed below the fuel tank 7.

A rear wheel RW is supported swingably in an upper-lower direction via a swing arm 10 extending toward the rear of the body frame 2. The driving force of the engine 6 is transmitted by a chain 15, which is an endless transmission member wound around a drive sprocket 16f on the engine side and a driven sprocket 16r on the rear wheel side.

An example of a cover member for covering the vehicle body may include not only a cover that covers a periphery of the engine but also a front fender 9 that covers an upper part of the front wheel FW or a rear fender 20 that covers a rear upper part of the rear wheel RW. The rear fender 20 is supported by the swing arm 10. The front fender 9 is appropriately supported on left and right sides of the vehicle at left and right fork portions of the front fork 4.

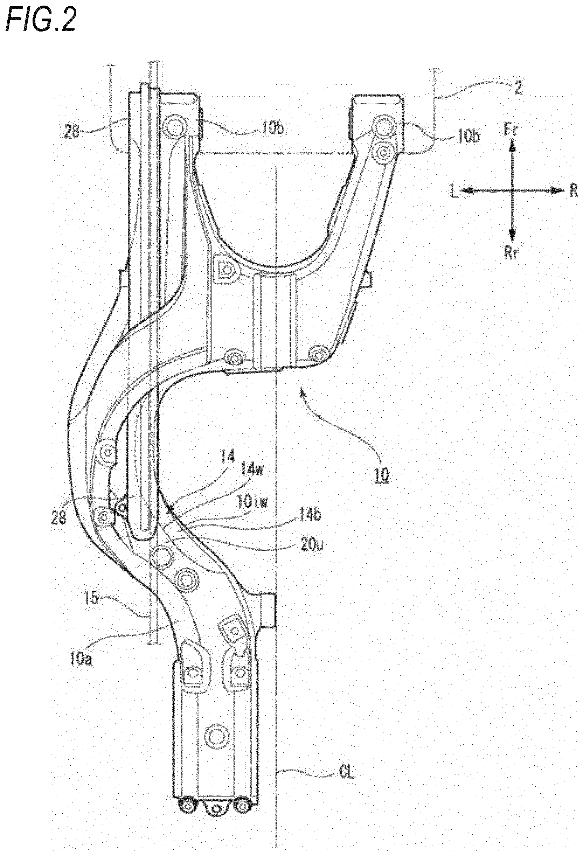

As illustrated in Fig. 2, the swing arm 10 of the embodiment has a cantilever structure in which only the side (left side) having the chain 15 in the left-right direction of the vehicle extends to the rear of the vehicle. Specifically, the swing arm 10 includes a front portion 10b rotatably supported to the body frame 2. The swing arm 10 includes an arm portion 10a which is curved so as to protrude to an outer side (a left side in Fig. 2) along a left side of the rear wheel RW from the left side of the front portion 10b and extends rearward. That is, the swing arm 10 has a structure in which the arm portion 10a is provided only on the side (left side) on which the chain 15 is disposed with respect to the rear wheel RW rotatably supported via a driving shaft 18.

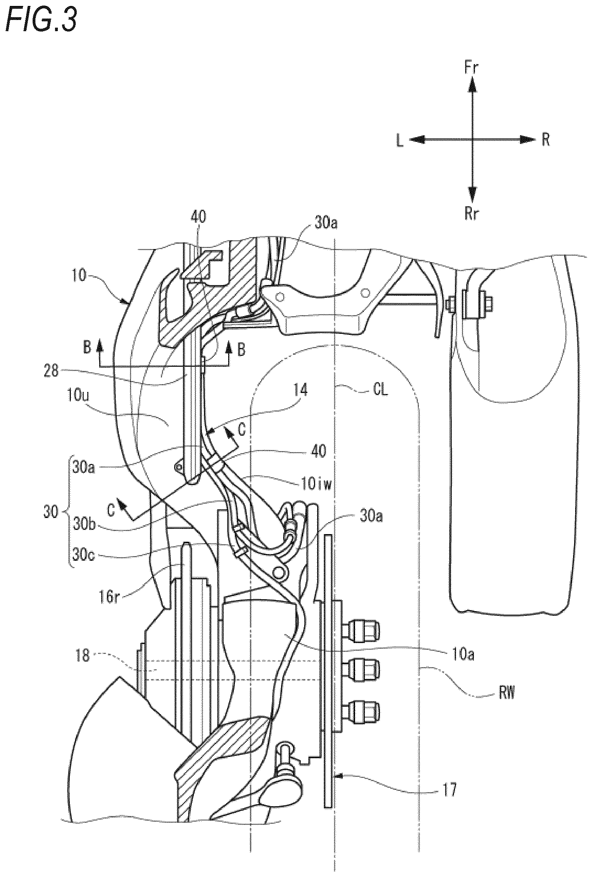

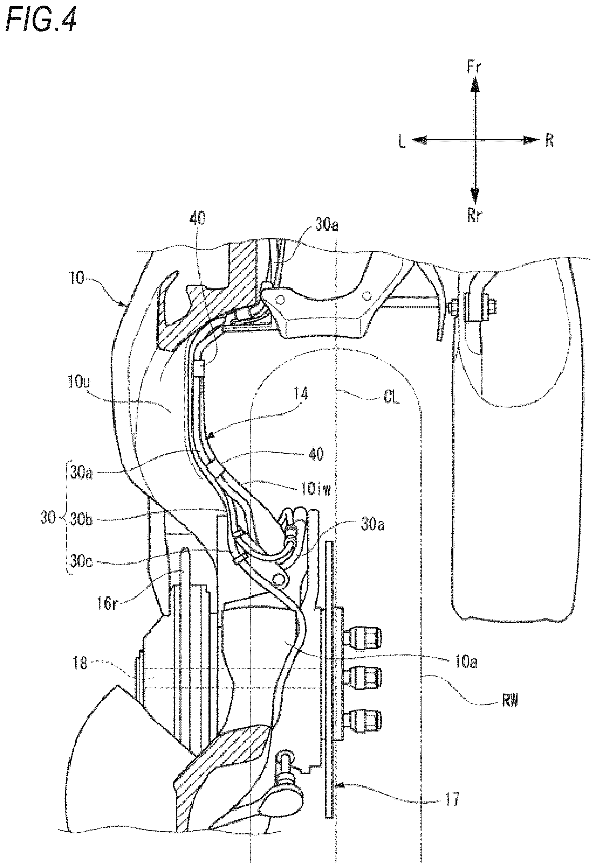

As illustrated in Figs. 3 and 4, the swing arm 10 is provided with a linear member 30 extending in a front-rear direction of the vehicle along the swing arm 10. The linear member 30 includes a rear wheel brake pipe 30a, a sensor harness 30b and a lamp harness 30c. The linear member 30 is accommodated in a recess 14 formed in the swing arm 10.

The rear wheel brake pipe 30a is a hydraulic pipe system for clamping a rear wheel brake disc 17 and is thicker than the sensor harness 30b and the lamp harness 30c which are linear members. Further, the rear wheel brake pipe 30a has a pressure resistant structure with highest rigidity.

The sensor harness 30b is a wiring for a sensor in a braking system, for example, an ABS (Anti-lock Brake System).

The lamp harness 30c is a wiring for supplying electric power to a lamp 29 provided on an upper part of a number plate 27 located at a rear end of the motorcycle 1 (see Fig. 1).

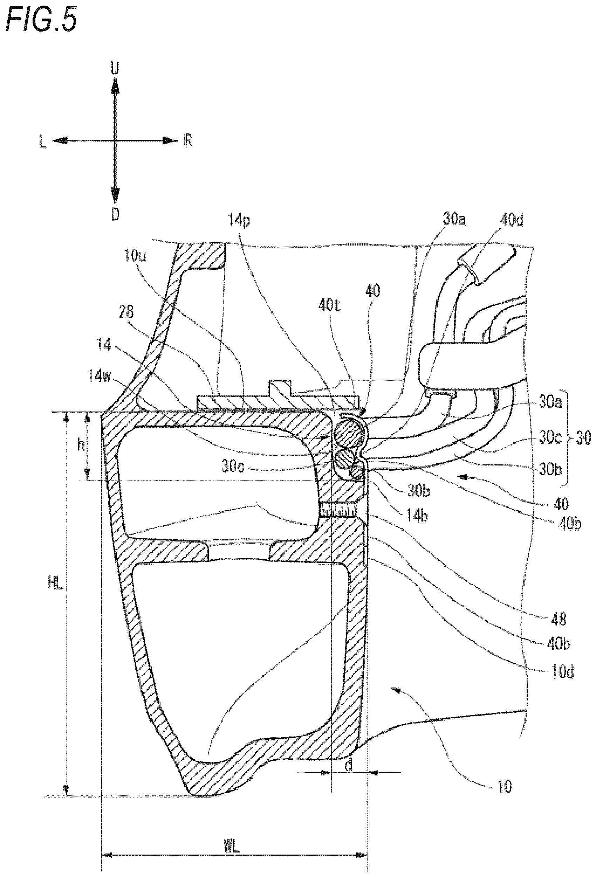

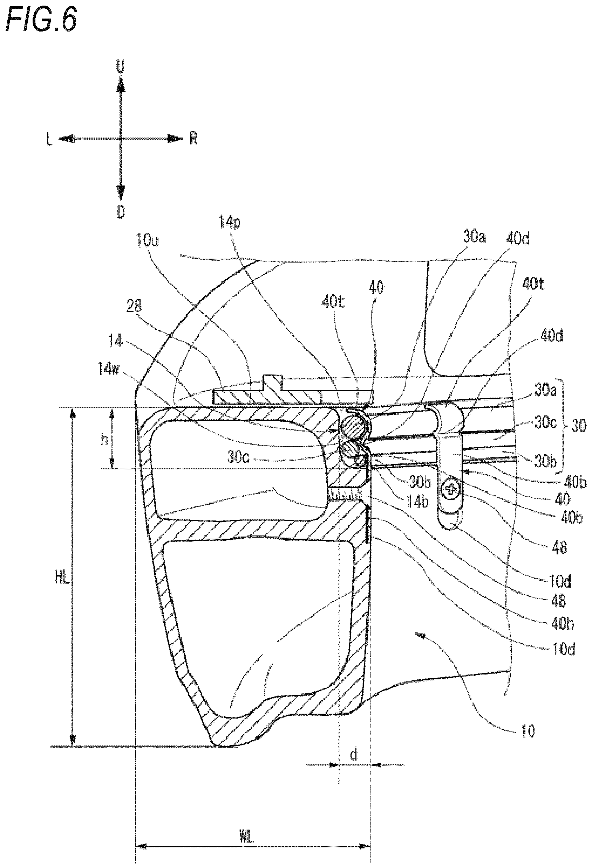

As illustrated in Figs. 5 and 6, the swing arm 10 is formed such that at least a part of a vertical section has a vertical width HL longer in the upper-lower direction than a lateral width WL in the vehicle width direction. In the swing arm 10, the recess 14 described above is provided on an inner side of an upper portion 10u, that is, on the side of the center CL of the vehicle in the vehicle width direction.

The recess 14 includes a recess bottom surface 14b, a recess inside surface 14w standing from the recess bottom surface 14b and opposed to the center CL of the vehicle in the vehicle width direction, and a recess opening 14p opened upward and inward in the vehicle. The recess inside surface 14w has a width h longer in the upper-lower direction than a width d in the vehicle width direction, and the recess inside surface 14w and the recess bottom surface 14b are formed substantially in an L-shape.

In the recess 14, the brake pipe 30a, the sensor harness 30b, and the lamp harness 30c which are the linear member 30 are arranged in the upper-lower direction to be accommodated in the recess 14.

In addition, the linear member 30 is configured such that the brake pipe 30a is disposed at the uppermost side and the sensor harness 30b and the lamp harness 30c are disposed below the brake pipe 30a. The brake pipe 30a is pressed from an upper side by a holding tip end 40t of a holding member 40 fixed to an inner wall lOiw of the swing arm 10, and positions of the sensor harness 30b and the lamp harness 30c are regulated by a leg portion 40b of the holding member 40 so as not to project from the recess 14.

Here, the holding member 40 is a plate-like member in which the holding tip end 40t is curved and thus is hooked and locked to the brake pipe 30a. Further, the leg portion 40b of the holding member 40 is fixed by a screw 48 so as to be embedded in a hollow portion 10d formed in an inner wall 10iw of the swing arm 10, so that the sensor harness 30b and the lamp harness 30c are regulated so as not to move to the inside of the vehicle. The plurality of holding members 40 are provided with predetermined distances.

In the holding member 40, a projection 40d is provided between the brake pipe 30a and the sensor harness 30b to partition the recess 14 in the upper-lower direction. The projection 40d is formed at a boundary portion between the holding tip end 40t and the leg portion 40b, and both the lower harnesses 30b and 30c are fixed to each other by projecting of the projection 40d.

The lamp harness 30c is provided to be in contact with both the brake pipe 30a and the sensor harness 30b. The lamp harness 30c is formed of a material which is an insulating resin and has a relatively soft surface and high friction coefficient.

The slider 28 is provided on the upper portion 10u of the swing arm 10 in the front-rear direction, and forms a sliding surface of the chain 15 for transmitting the driving force to the rear wheel RW. The slider 28 is mounted to cover the upper side of the recess opening 14p of the recess 14 and regulates upward movement of the brake pipe 30a.

As described above, according to the embodiment, the recess 14 is formed to be longer in the upper-lower direction in the vertical section of the swing arm 10 where the width in the upper-lower direction is longer than the width in the vehicle width direction, it is possible to form accommodation spaces of the brake pipe 30a and the sensor harness 30b while reducing stress concentration of the swing arm 10. In addition, since the brake pipe 30a and the sensor harness 30b are vertically arranged to be accommodated in the recess 14, it is possible to protect the brake pipe 30a and the sensor harness 30b from stepping stones and the like and to have excellent appearance design properties.

In the embodiment, at least a part of the recess opening 14p is covered with the slider 28, so that it is possible to regulate the upward movement of the brake pipe 30a and the sensor harness 30b in the recess 14. In addition, it is possible to effectively prevent interference of the chain 15 with the brake pipe 30a and the sensor harness 30b by the slider 28. Further, since the recess 14 is opened at least upward in the vehicle, the wiring of the linear member 30 can be easily performed.

In the embodiment, when the brake pipe 30a and the sensor harness 30b are accommodated in the recess 14 including the recess opening 14p opened upward and inward, since the large-diameter brake pipe 30a is disposed at the uppermost side of the recess 14, the brake pipe 30a can be used as a position regulating member of the sensor harness 30b disposed below the brake pipe 30a. In addition, since the inward movement of the brake pipe 30a and the sensor harness 30b are regulated by the holding member 40 fixed to the swing arm 10 and the upward movement of the brake pipe 30a is regulated, it is possible to prevent the brake pipe 30a and the sensor harness 30b from projecting from the recess 14.

In the embodiment, since the holding member 40 includes the projection 40d, which partitions the recess 14 in the upper-lower direction, between the brake pipe 30a and the sensor harness 30b, the partition is provided in a space that is long in the upper-lower direction, and thus the movement of the brake pipe 30a and the sensor harness 30b can be effectively regulated.

In the embodiment, since the lamp harness 30c is provided to be in contact with the brake pipe 30a and the sensor harness 30b, the lamp harness 30c can regulate the movement of the brake pipe 30a and the sensor harness 30b.

In the embodiment, further, since the swing arm 10 has the cantilever structure, the appearance design properties is excellent. In addition, the brake pipe and the sensor harness are disposed in the recess 14, so that it is possible to further reduce the interference of the chain 15 with the brake pipe 30a and the sensor harness 30b. Moreover, since the brake pipe 30a and the sensor harness 30b are hardly seen from the outside of the vehicle, it is possible to further make the appearance design properties excellent.

Although the embodiment of the invention is described above, the invention is not limited thereto but can be modified as appropriate.

For example, the recess 14 includes the recess opening 14p opened upward and inward in the vehicle in the embodiment, but the recess 14 may include the recess opening 14p opened upward in the vehicle.

In addition, the projection 40d of the holding member 40 is not always necessary, and in the case where the projection 40d is provided, the shape or the number thereof may be arbitrarily set.

Further, the lamp harness 30c is not necessarily accommodated in the recess 14, and other linear members such as harnesses may be disposed.

In the embodiment, the motorcycle is described, but the invention may be employed in another saddle-riding type vehicle such as a buggy.

## Claims

1. A linear member holding structure of a saddle-riding type vehicle (1) comprising:
a swing arm (10) that includes a front portion (10b) which is swingably supported by a body frame (2) and a rear portion which rotatably supports a rear wheel (RW) via a driving shaft (18); and
a linear member (30) that extends along the swing arm (10) in a front-rear direction of the vehicle and includes at least a rear wheel brake pipe (30a),
wherein the swing arm (10) has at least a part having a vertical section formed longer in an upper-lower direction than in a vehicle width direction,
wherein the part of the swing arm (10) is formed with a recess (14) on an upper part thereof,
wherein the recess (14) includes a recess bottom surface (14b) and a recess inside surface (14w) standing from the recess bottom surface (14b) and opposed to a center (CL) in the vehicle width direction,
wherein the recess inside surface (14w) has a width longer in the upper-lower direction than a width in the vehicle width direction of the recess bottom surface (14b),
**characterised in that**
the linear member (30) includes a sensor harness (30b) and wherein the brake pipe (30a) and the sensor harness (30b) are arranged in the upper-lower direction to be accommodated in the recess (14),
wherein the recess (14) includes a recess opening (14p) at least opened toward an upper side of the vehicle, and
wherein at least a part of the recess opening (14p) is covered with a slider (28) that forms a sliding surface of an endless transmission member (15) for transmitting a driving force to the rear wheel (RW).

2. The linear member holding structure according to claim 1,
wherein the recess opening (14p) is opened upward and inward in the vehicle,
wherein the brake pipe (30a) is larger in diameter than the sensor harness (30b),
wherein the brake pipe (30a) is disposed above the sensor harness (30b),
wherein the brake pipe (30a) and the sensor harness (30b) are held by a holding member (40) fixed to the swing arm (10), and
wherein the holding member (40) regulates upward movement of the brake pipe (30a) while regulating inward movement of the brake pipe (30a) and the sensor harness (30b).

3. The linear member holding structure according to claim 2,
wherein the holding member (40) includes a projection that is provided between the brake pipe (30a) and the sensor harness (30b) to partition the recess (14) in the upper-lower direction.

4. The linear member holding structure according to any one of claims 1 to 3,
wherein the linear member (30) further includes a lamp harness (30c) that supplies electric power to a lamp provided at a rear portion of the saddle-riding type vehicle (1), and
wherein the lamp harness (30c) is provided to be in contact with the brake pipe (30a) and the sensor harness (30b).

5. The linear member holding structure according to any one of claims 1 to 4,
wherein the swing arm (10) has a cantilever structure in which an arm portion (10a) is provided only on a side on which the endless transmission member (15) is disposed with respect to the rear wheel (RW).

## Patentansprüche

1. Haltestruktur für ein lineares Element eines Fahrzeugs mit Sattel (1), umfassend:
einen Schwingarm (10), der einen Frontabschnitt (10b) umfasst, welcher durch einen Karosserierahmen (2) schwenkbar gelagert ist, und einen hinteren Abschnitt, der ein Hinterrad (RW) drehbar über eine Antriebswelle (18) trägt; und
ein lineares Element (30), das sich entlang des Schwingarms (10) in einer Vorne-Hinten-Richtung des Fahrzeugs erstreckt, und wenigstens eine Hinterrad-Bremsleitung (30a) umfasst,
wobei ein Teil des Schwingarms (10) wenigstens einen vertikalen Abschnitt umfasst, der in einer Oben-Unten-Richtung länger ist als in Fahrzeug-Breitenrichtung,
wobei der Teil des Schwingarms (10) an seinem oberen Teil mit einer Aussparung (14) gebildet ist,
wobei die Aussparung (14) eine Aussparungs-Bodenfläche (14b) und eine Aussparungs-Innenfläche (14w) umfasst, welche von der Aussparungs-Bodenfläche (14b) absteht und einer Mitte (CL) in der Fahrzeug-Breitenrichtung gegenüberliegt,
wobei die Aussparungs-Innenfläche (14w) eine Breite aufweist, die in der Oben-Unten-Richtung länger ist als eine Breite in der Fahrzeug-Breitenrichtung der Aussparungs-Bodenfläche (14b), **dadurch gekennzeichnet, dass**
das lineare Element (30) einen Sensor-Kabelbaum (30b) umfasst, und
wobei die Bremsleitung (30a) und der Sensor-Kabelbaum (30b) in der Oben-Unten-Richtung angeordnet sind, um in der Aussparung (14) untergebracht zu werden,
wobei die Aussparung (14) eine Aussparungs-Öffnung (14p) umfasst, die wenigstens in Richtung einer oberen Seite des Fahrzeugs geöffnet ist, und
wobei wenigstens ein Teil der Aussparungs-Öffnung (14p) mit einem Schieber (28) abgedeckt ist, der eine Gleitfläche eines endlosen Übertragungsmittels (15) bildet, um eine Antriebskraft auf das Hinterrad (RW) zu übertragen.

2. Haltestruktur für ein lineares Element nach Anspruch 1,
wobei die Aussparungs-Öffnung (14p) nach oben und nach innen in dem Fahrzeug geöffnet ist,
wobei die Bremsleitung (30a) einen größeren Durchmesser hat als der Sensor-Kabelbaum (30b),
wobei die Bremsleitung (30a) über dem Sensor-Kabelbaum (30b) angeordnet ist,
wobei die Bremsleitung (30a) und der Sensor-Kabelbaum (30b) durch ein Halteelement (40) gehalten werden, das an dem Schwingarm (10) befestigt ist, und
wobei das Halteelement (40) die Aufwärtsbewegung der Bremsleitung (30a) regelt, während es die Bewegung der Bremsleitung (30a) und des Sensor-Kabelbaums (30b) nach innen regelt.

3. Haltestruktur für ein lineares Element nach Anspruch 2,
wobei das Halteelement (40) einen Vorsprung umfasst, der zwischen der Bremsleitung (30a) und dem Sensor-Kabelbaum (30b) vorgesehen ist, um die Aussparung (14) in der Oben-Unten-Richtung zu teilen.

4. Haltestruktur für ein lineares Element nach einem der Ansprüche 1 bis 3,
wobei das lineare Element (30) weiterhin einen Lampen-Kabelbaum (30c) umfasst, der eine Lampe an einem hinteren Abschnitt des Fahrzeugs mit Sattel (1) mit Strom versorgt, und
wobei der Lampen-Kabelbaum (30c) so ausgebildet ist, dass er mit der Bremsleitung (30a) und dem Sensor-Kabelbaum (30b) in Kontakt ist.

5. Haltestruktur für ein lineares Element nach einem der Ansprüche 1 bis 4,
wobei der Schwingarm (10) eine freitragende Konstruktion besitzt, bei der ein Armabschnitt (10a) nur an einer Seite vorgesehen ist, an der das endlose Übertragungsmittel (15) in Bezug auf das Hinterrad (RW) angeordnet ist.

## Revendications

1. Structure de maintien d'élément linéaire d'un véhicule de type à selle (1) comprenant :
un bras oscillant (10) qui comprend une partie avant (10b) qui est supporté, de façon à pouvoir osciller, par un cadre (2) et une partie arrière qui supporte en rotation une roue arrière (RW) par l'intermédiaire d'un arbre d'entraînement (18) ; et
un élément linéaire (30) qui s'étend le long du bras oscillant (10) dans une direction avant-arrière du véhicule et comprend au moins une conduite de frein de roue arrière (30a),
dans laquelle le bras oscillant (10) a au moins une partie ayant une section verticale formée plus longue dans une direction de haut en bas que dans une direction de largeur de véhicule,
dans laquelle la partie du bras oscillant (10) est formée avec un renfoncement (14) sur une partie supérieure de celle-ci,
dans laquelle le renfoncement (14) comprend une surface inférieure de renfoncement (14b) et une surface intérieure de renfoncement (14w) partant de la surface inférieure de renfoncement (14b) et opposée à un centre (CL) dans la direction de largeur de véhicule,
dans laquelle la surface intérieure de renfoncement (14w) a une largeur plus longue dans la direction de haut en bas qu'une largeur dans la direction de largeur de véhicule de la surface inférieure de renfoncement (14b),
**caractérisée en ce que**
l'élément linéaire (30) comprend un faisceau de capteur (30b) et
dans laquelle la conduite de frein (30a) et le faisceau de capteur (30b) sont disposés dans la direction de haut en bas de façon à être reçus dans le renfoncement (14),
dans laquelle le renfoncement (14) comprend une ouverture de renfoncement (14p) au moins ouverte vers un côté supérieur du véhicule, et
dans laquelle au moins une partie de l'ouverture de renfoncement (14p) est recouverte par une glissière (28) qui forme une surface de coulissement d'un élément de transmission sans fin (15) pour transmettre une force d'entraînement à la roue arrière (RW).

2. Structure de maintien d'élément linéaire selon la revendication 1,
dans laquelle l'ouverture de renfoncement (14p) est ouverte vers le haut et vers l'intérieur dans le véhicule,
dans laquelle la conduite de frein (30a) a un diamètre plus grand que celui du faisceau de capteur (30b),
dans laquelle la conduite de frein (30a) est disposée au-dessus du faisceau de capteur (30b),
dans laquelle la conduite de frein (30a) et le faisceau de capteur (30b) sont maintenus par un élément de maintien (40) fixé à l'arbre oscillant (10), et
dans laquelle l'élément de maintien (40) règle le mouvement vertical de la conduite de frein (30a) tout en réglant le mouvement vers l'intérieur de la conduite de frein (30a) et du faisceau de capteur (30b).

3. Structure de maintien d'élément linéaire selon la revendication 2,
dans laquelle l'élément de maintien (40) comprend une saillie qui est prévue entre la conduite de frein (30a) et le faisceau de capteur (30b) pour cloisonner le renfoncement (14) dans la direction de haut vers le bas.

4. Structure de maintien d'élément linéaire selon l'une quelconque des revendications 1 à 3,
dans laquelle l'élément linéaire (30) comprend en outre un faisceau de lampe (30c) qui fournit un courant électrique à une lampe disposée au niveau d'une partie arrière du véhicule de type à selle (1), et
dans laquelle le faisceau de lampe (30c) est disposé de façon à entrer en contact avec la conduite de frein (30a) et le faisceau de capteur (30b).

5. Structure de maintien d'élément linéaire selon l'une quelconque des revendications 1 à 4,
dans laquelle le bras oscillant (10) a une structure en porte-à-faux dans laquelle une partie de bras (10a) est disposée uniquement sur un côté sur lequel est disposé l'élément de transmission sans fin (15) par rapport à la roue arrière (RW).
